Europäisches Patentamt

European Patent Office

Office européen des brevets

(19)

(11) Publication number: **0 267 593**
**A2**

## (12) EUROPEAN PATENT APPLICATION

(21) Application number: 87116617.9

(22) Date of filing: 10.11.87

(51) Int. Cl.⁴ **H01S 3/03** , H01S 3/097

(30) Priority: 10.11.86 GB 8626751

(43) Date of publication of application:
**18.05.88 Bulletin 88/20**

(84) Designated Contracting States:
**AT BE CH DE ES FR GB GR IT LI LU NL SE**

(71) Applicant: **Commission of the European Communities**
**Bâtiment Jean Monnet Plateau du Kirchberg**
**L-2920 Luxembourg(LU)**

(72) Inventor: **Van Dijk, Johannes Wilhelmus**
**36 River View Avenue**
**North Ferriby North Humberside,HU14 3DT(GB)**

(74) Representative: **Oulton, Richard John**
**R.J. OULTON & CO. 22 Whitefriargate**
**Hull North Humberside HU1 2EX(GB)**

(54) **Improvements in or relating to lasers.**

(57) The invention provides a gas-discharge laser comprising an array of pre-ionising electrodes (PIP) operating by a sliding-spark discharge; there being an array provided on either side of the main electrodes (ME1, ME2) of the laser.

*FIG. 1.*

# IMPROVEMENTS IN OR RELATING TO LASERS

The present invention relates to a gas discharge laser.

It is known to use a pre-ionising electrode array in a gas-discharge laser to condition the gas to facilitate the discharge between the discharge or main electrodes of the laser; and, in particular, it is known to use a sliding spark array employing a linear series of pairs of electrode "pins" passing lengthwise along the discharge vessel of the laser and along which a spark passes progressively form one end of the series to the other, that is, from one pair of pins to the next in the series.

However, the arrangements of a sliding-spark array heretofore employed have not been as efficacious as could be wished for in promoting the discharge between the main electrodes and in preventing arcing of the main electrodes.

It is an object of the present invention to provide a gas-discharge laser having a more efficacious sliding-spark arrangement.

There is provided by the present invention a gas-discharge laser comprising an array of pre-ionising electrodes operating by a sliding-spark discharge, characterised in that, a plurality of sliding-spark pre-ionising electrode arrays (3,5,7,& 9) are employed namely at each lateral side of each main electrode (ME1 & ME2) to provide ionisation throughout the discharge volume between the main electrodes.

In each array, a first electrode in each pair of electrodes may be electrically connected with one of the main electrodes and the second electrode of each pair electrically connected with the other of the main electrodes.

The electrical connection of the pre-ionising electrodes with the respective main electrode is preferably effected via a peaking capacitor except, optionally, the electrode of the last pair connected with the lower voltage main electrode.

The arrays employed in the present invention may be constituted as a unit so that on installation of the unit in the discharge chamber of the laser, each array is positioned in relation to the respective main electrode as required.

It is also preferred in the present invention that the electrode pairs on one side of a main electrode are offset by 50% with respect of those on the other side of the main electrode, and that, in each array, adjacent electrode pairs are separated by a distance of some 2 cm.

A further preference is that each array exceeds in length the length of the main electrodes, and that the distance of an array from the main electrode centre line is minimised.

The present invention will now be described, by way of example only, with reference to the accompanying drawings, in which:-

Figure 1 is a cross-sectional view of the discharge chamber of a gas-discharge laser according to the present invention.

Figure 2 is a perspective view of a pre-ionising electrode unit employed in the laser of Figure 1, some of the pre-ionising electrodes having been omitted to simplify the drawing, and

Figure 3 is a diagrammatic representation of a set of the pre-ionising electrodes of the unit.

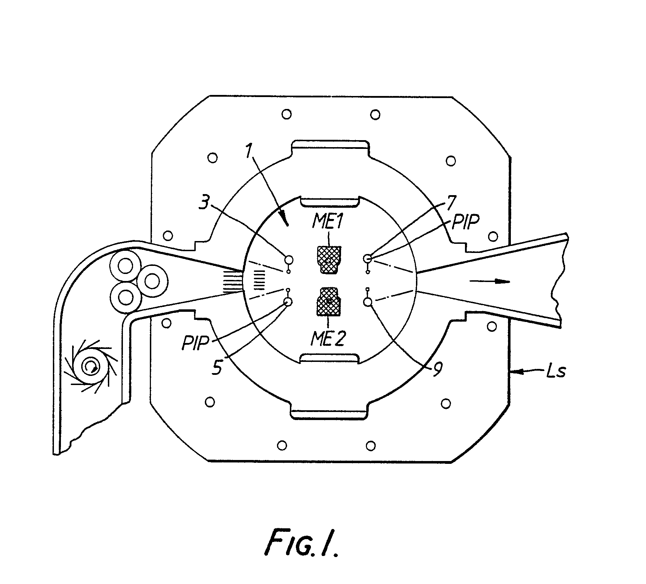

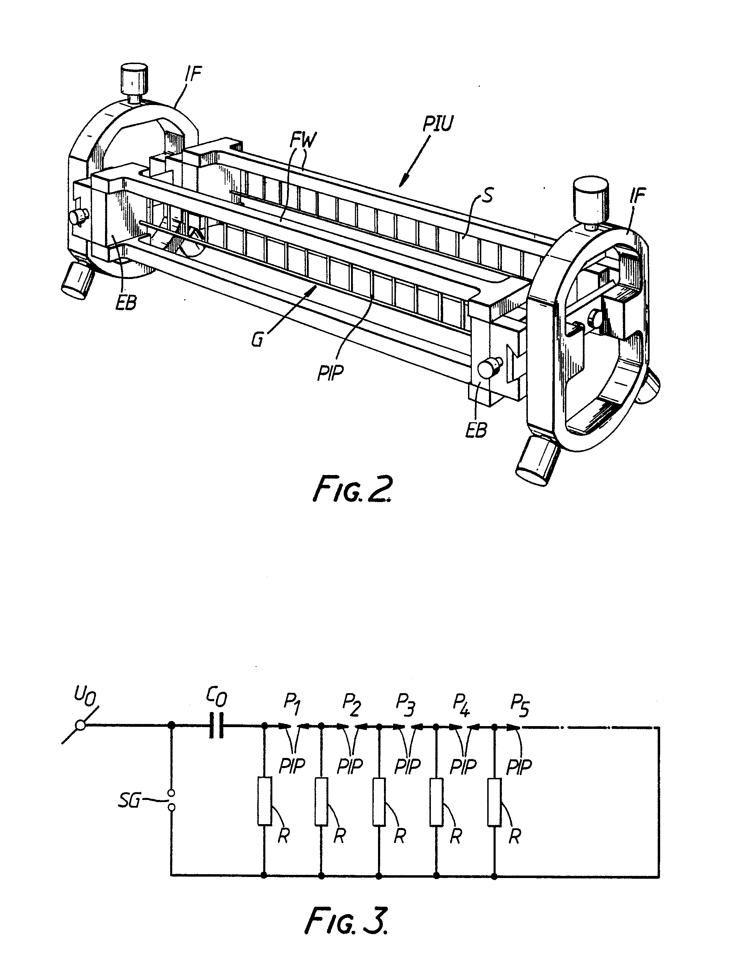

Refering to Figure 1, the laser, generally indicated at Ls, comprises discharge chamber 1 in which the main lasing volume between the main electrodes ME1, ME2 is preconditioned by four arrays (3,5,7,9) of pre-ionising, sliding spark electrode sets assembled as a unit, PIU (see especially Fig.2) to create a weak conducting medium for the main discharge; there being a pair of arrays flanking each of the top and bottom main electrodes.

The arrays are made up as a unit and the unit PIU is shown in Fig.2. For simplicity the unit seen in Fig. 2 shows only two of the arrays (5,9) of pairs of pre-ionised pins PIP mounted on supporting frameworks FW dovetailed into end blocks EB carried by insulating end frames IF mounted, in use, in the discharge chamber. The assembly, for convenience, could be mounted directly on the main electrodes in a self-synchronizing mode. A design feature here was the ability to alter the P.I. - electrode distance and optimize the preconditioning of the main electrodes with U.V. photons and to avoid flashover (arcing) between the P.I. unit and main electrodes.

Fig.3 is a simple sliding-spark diagram and shows an array of the pre-ionising pins PIP. The gap (p1 to Ps respectively ) between opposed pins is $\simeq$ .5mm. $\simeq$ 0.8mm. Initially the storage capacitor Co is charged to a potential of 65KV. After the spark-gap SG is triggered by a trigger circuit (not shown) the voltage rises on the first pin of gap P1. The second pin of gap P1 is at a low potential and the gap breaks down. All pins are loaded with a resistor R in this instance of 50K$\Omega$ to form a high impedance for the incremental surge current. The potential across gap P2 rises until the second gap breaks down and this continues for the remaining gaps until all gas between the pins is ionized. After this sliding-spark the discharge path avoids the 50K$\Omega$ resistors resulting in a low impedance and high current characteristic.

The simple configuration is an improvement over previously reported sliding-spark REA and MAL lasers. The main departure is use of a four sliding-spark array of pre-ionised pins PIP in a double sided geometry next to the top and bottom electrodes. The tungsten pins are symmetrically displaced with respect to the optical axis. Homgeneity of the ionization photons for the preconditioning of the main lasing gap and the lack of obstruction to transverse gasflow are particular improvements in this set-up. The arc arrays on each side of the electrode are fed by different capacitors which makes it easier to match the circuit parameters, producing more uniform and critically damped break down which both U.V. production and avoid erosion of the P.I. pins. As indicated above the pre-ioniser isolated from the main discharge so the delay between these live discharges can be tuned. Delay times are between 200 nsec to 1.5 $\mu$ sec to provide satisfactory plasma conditions.

The time interval between the surge currents at successive spark gap breakdowns is less than 1 nsec. For the 33 gaps this results in an overall delay of less than 33 nsec. It has been found that a delay of 75 nsec between the triggers of the P.I. and main bank is satisfactory. The optimal delay between P.I. and main discharge recommended is about 200 nsec and is in close approximation to what was found.

After the initial runs with the laser the P.I. - unit was improved by introducing capacitors in parallel with the resistors with a value of 180 pF each. Effectively the surge current is forced to charge and discharge these spark peaking capacitors, which extend the photon production.

Operation of the P.I. unit suggests the following:-

a) a double row of sparks with a 50% offset to one another gives improved uniformity compared with a single sided illumination.

b) In order to achieve a reasonably homogeneous photon distribution to precondition the main electrode gap, a spark is required every 2 cm.

c) to avoid tail off end-effects on the photonization caused by the limited pre-ioniser length, the latter must exceed the electrode length; with the 250 mm long electrodes, a 300 mm P.I. is used.

d) The most critical parameter is the distance of the spark array from the electrode centreline and this should be minimized. The P.I. offset from the main electrodes employed was between 2 and 5 cm.

Uniformity in pre-ionisation in the directions transverse to the main discharge current flow is more essential than uniformity in the parallel direction. Space charge effects distort the local electric field and the ionization rate. but smooth the plasma no-uniformities that develop during discharge initiation and create a uniform discharge.

## Claims

1. A gas-discharge laser comprising an array of pre-ionising electrodes operating by a sliding-spark discharge, characterised in that, a plurality of sliding-spark pre-ionising electrode arrays (3,5,7 & 9) are employed,namely at each lateral side of the main electrode (ME1 & ME2) to provide ionisation throughout the discharge volume between the main electrodes.

2. A gas-discharge laser according to claim 1, characterised in that, in each array a first electrode in each pair of electrodes (PIP) is electrically connected with one of the main electrodes (ME1 or ME2) and the second electrode of each pair of electrodes (PIP) is electrically connected with the other of the main electrodes (ME1 or ME2).

3. A gas-discharge laser according to claim 2, characterised in that, the electrical connection of the pre-ionising electrodes (PIP) with the respective main electrode (ME1 or ME2) is effected by a peaking capacitor except, optionally, the electrode of the last pair connected with the lower voltage main electrode (ME1 or ME2).

4. A gas-discharge laser according to any of the preceding claims, characterised in that, the arrays are made up as a unit (PIU).

5. A gas-discharge laser according to any of the preceding claims, characterised in that, the electrode pairs on one side of a main electrode (ME1 or ME2) are offset by 50% with respect to those on the other side of the main electrode.

6. A gas-discharge laser according to any of the preceding claims,characterised in that, in each array (3,5,7 & 9) adjacent electrode pairs are separated by a distance of some 2cm.

7. A gas-discharge laser according to any of the preceding claims, characterised in that, each array (3,5,7 & 9) exceeds in length the length of the main electrodes (ME1, ME2).

8. A gas-discharge laser according to any of the preceding claims, characterised in that, the distance of each array (3,5,7 & 9) from the main electrode centre line is at a minimum.

*FIG.1.*

FIG. 2

FIG. 3.